# EUROPEAN PATENT SPECIFICATION

(11) **EP 4 180 821 B1**
(45) Date of publication and mention of the grant of the patent: **28.05.2025**
(21) Application number: 22204343.2
(22) Date of filing: 28.10.2022
(51) Int. Cl.: G01N 35/04, B67B 7/18, B67B 3/20

(54) **CAP ATTACHMENT-DETACHMENT DEVICE AND PRE-PROCESSING DEVICE**
KAPPENBEFESTIGUNGS-/-LÖSUNGSVORRICHTUNG UND VORVERARBEITUNGSVORRICHTUNG
DISPOSITIF DE FIXATION-SÉPARATION DE CAPUCHON ET DISPOSITIF DE PRÉTRAITEMENT

(30) Priority: 15.11.2021 JP 2021185895
(43) Date of publication of application: 17.05.2023
(73) Proprietor: SHIMADZU CORPORATION, Kyoto-shi, Kyoto 604-8511 (JP)
(72) Inventor: NUMATA, Koji, Kyoto-shi Kyoto 604-8511 (JP); SHIBABUKI, Tadanobu, Kyoto-shi Kyoto 604-8511 (JP); TSUKAHARA, Mio, Kyoto-shi Kyoto 604-8511 (JP); KITAGAWA, Takaei, Kyoto-shi Kyoto 604-8511 (JP)
(74) Representative: Müller-Boré & Partner Patentanwälte PartG mbB

(56) References cited:
- EP-A1- 1 103 513
- US-A1- 2008 022 808
- US-A1- 2017 113 909
- US-A1- 2020 071 148

## Description

### BACKGROUND

### Technical Field

The present invention relates to a cap attachment-detachment device and a pre-processing device.

### Description of Related Art

Pre-processing may be performed on a sample with use of a container such as a centrifuge tube before the sample is analyzed in an analysis device. For example, in pre-processing, a sample to be analyzed and an additive are injected into a container having a cap, and then the contents of the container are stirred, etc. Thereafter, the contents are extracted from the container and injected into a predetermined vial. The contents including the pre-processed sample is supplied from the vial to the analysis device, whereby a desired analysis is performed in regard to the sample.

In the pre-processing, before and after the contents are injected into the container, or before and after the contents are extracted from the container, the cap is attached or detached by the cap attachment-detachment device. For example, in a cap opening-closing device described in JP 03-226484 A, a sample container is gripped by a pair of grippers of a grip opening-closing driver, and a cap is gripped by a robot hand. In this state, the grip opening-closing driver is rotated, so that the cap is attached or detached.

US 2008/022808 A1 describes a device and method for removing screw-threaded caps from tubes such as microtubes used in laboratories or micro-biological systems.

EP 1 103 513 A1 describes a device for checking the fitting of a threaded cap onto a container, the device being associated with automatic cap-fitting apparatus, particularly of the carousel type, including rotatable support means which can move at least one container about a principal axis of the apparatus and at least one screwing head for screwing a cap onto a respective container so as to close the container as a result of its movement about the principal axis, in which each screwing head is arranged to screw a cap onto a container with a predetermined tightening torque.

US 2017/113909 A1 describes a use of an SBS-formatted bit exchange magazine that enables the automated replacement of adapter bits on a laboratory capper, decapper or combination capper/decapper.

### SUMMARY

With the cap opening-closing device described in JP 03-226484 A, caps are attached or detached one by one. Here, it is preferable to attach or detach a plurality of caps simultaneously in order to improve throughput. However, because the dimensions of a plurality of containers vary, in a case in which the plurality of caps are attached or detached simultaneously, the plurality of caps are fastened non-uniformly. Therefore, the caps cannot be appropriately attached to or detached from the containers.

An object of the present invention is to provide a cap attachment-detachment device and a pre-processing device capable of simultaneously attaching or detaching a plurality of caps. The present invention is defined by the independent claims. Preferred examples are defined in the dependent claims.

One aspect of the present invention relates to a cap attachment-detachment device that includes a rotation driver, a plurality of attachment-detachment portions corresponding to a plurality of containers, and a transmitter that transmits rotation of the rotation driver to the plurality of attachment-detachment portions, wherein each of the plurality of attachment-detachment portions includes an operation portion that moves in a first direction or a second direction that is opposite to the first direction in response to rotation of the rotation driver and rotates a cap to attach the cap to or detach the cap from a corresponding container, and a restricting portion that restricts a torque to be applied to the cap by the operation portion when the cap is attached to the container. The cap attachment-detachment device further includes a rotation detector that detects rotation of the operation portion, a determiner that determines whether the cap is properly fastened to the container based on a result of detection by the rotation detector. The rotation driver includes a drive pulse generator that generates a drive pulse and an electric motor that is rotated based on a drive pulse generated by the drive pulse generator. The determiner determines whether the cap is properly fastened to the container based on a count of drive pulses generated by the drive pulse generator and a result of detection by the rotation detector.

Another aspect of the present invention relates to a pre-processing device that includes the above-mentioned cap attachment-detachment device that simultaneously attaches a plurality of caps to or detaches the plurality of caps from a plurality of containers, and a pre-processor that performs pre-processing on samples contained in the plurality of containers.

Other features, elements, characteristics, and advantages of the present disclosure will become more apparent from the following description of preferred embodiments of the present disclosure with reference to the attached drawings.

### BRIEF DESCRIPTION OF THE DRAWING

Fig. 1 is a perspective view showing the appearance of the cap attachment-detachment device according to one embodiment of the present invention;
Fig. 2 is a schematic diagram showing the configuration of the cap attachment-detachment device Fig. 1;
Fig. 3 is a diagram for explaining the operation of the cap attachment-detachment device when caps are attached;
Fig. 4 is a diagram for explaining the operation of the cap attachment-detachment device when the caps are attached;
Fig. 5 is a diagram for explaining the operation of the cap attachment-detachment device when the caps are attached;
Fig. 6 is a diagram for explaining the operation of the cap attachment-detachment device when the caps are detached;
Fig. 7 is a diagram for explaining the operation of the cap attachment-detachment device when the caps are detached;
Fig. 8 is a diagram for explaining the operation of the cap attachment-detachment device when the caps are detached;
Fig. 9 is a block diagram showing one example of an analysis system including a pre-processing device;
Fig. 10 is a schematic diagram showing the configuration of a cap attachment-detachment device according to a modified example;
Fig. 11 is a schematic diagram showing the configuration of a cap attachment-detachment device according to another embodiment;
Fig. 12 is a schematic plan view showing the positional relationship between a photoelectric sensor and a light-shielding plate included in each rotation detector;
Fig. 13 is a block diagram showing the functional configuration of a control system of the cap attachment-detachment device of Fig. 11; and
Fig. 14 is a flowchart showing one example of a proper fastening determining operation performed by a proper fastening determiner of a controller of Fig. 12.

### DETAILED DESCRIPTION

### (1) Configuration of Cap Attachment-detachment Device

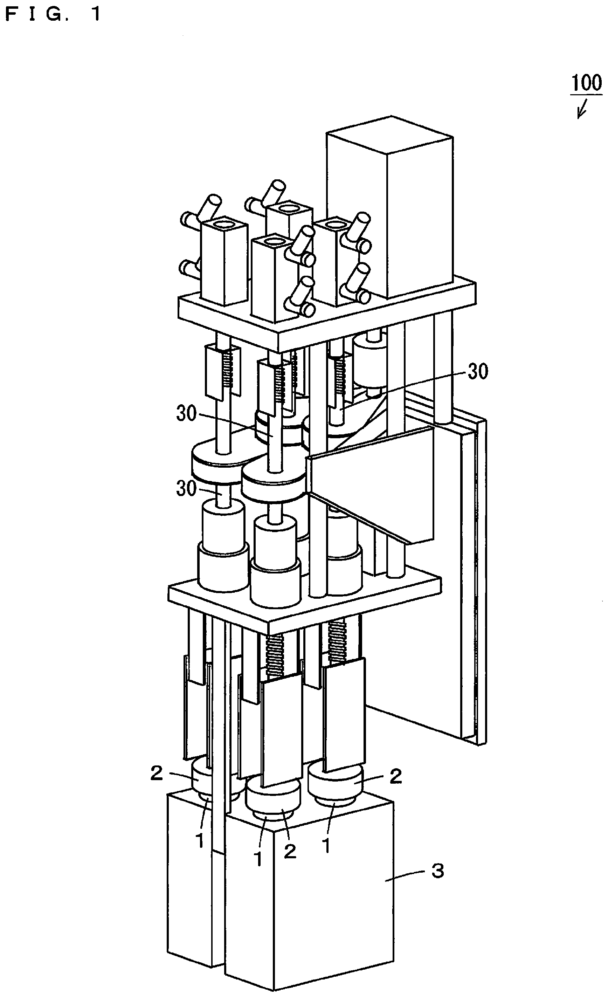

A cap attachment-detachment device and a pre-processing device according to embodiments of the present invention will be described below in detail with reference to the drawings. Fig. 1 is a perspective view showing the appearance of the cap attachment-detachment device according to one embodiment of the present invention. As shown in Fig. 1, the cap attachment-detachment device 100 includes a plurality (four in the present example) of attachment-detachment portions 30 having axes extending in an up-and-down direction and is used together with a container holding rack 3.

The container holding rack 3 holds a plurality of containers 1 respectively corresponding to the plurality of attachment-detachment portions 30. Each container 1 is a centrifuge tube that is used in pre-processing for a sample analysis, for example. The cap attachment-detachment device 100 is configured to be capable of simultaneously attaching caps 2 to or detaching the caps 2 from the upper ends of the plurality of containers 1 when the screw-type caps 2 (screw caps) of the plurality of corresponding containers 1 are operated from above with use of the plurality of attachment-detachment portions 30.

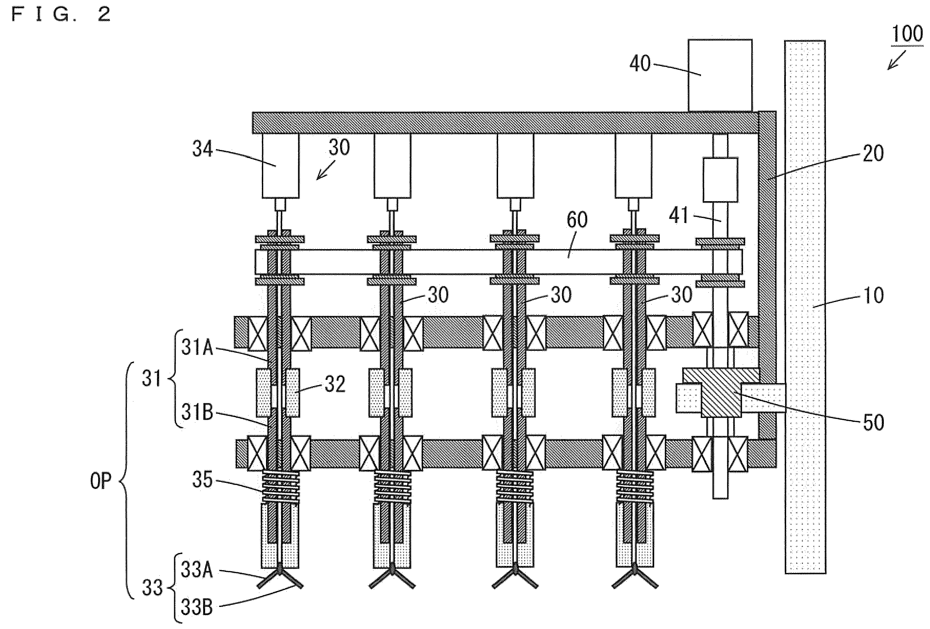

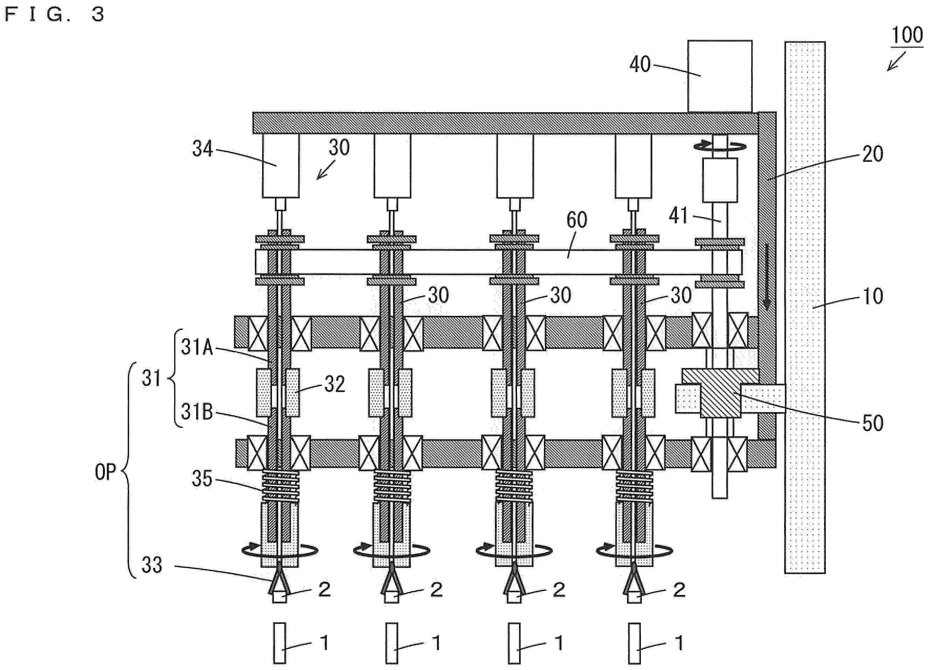

Fig. 2 is a schematic diagram showing the configuration of the cap attachment-detachment device 100 of Fig. 1. In Fig. 2, the plurality of attachment-detachment portions 30 are shown to be arranged in a left-and-right direction in order to facilitate understanding. The same applies to Figs. 3 to 8 and Fig. 10, described below.

As shown in Fig. 2, the cap attachment-detachment device 100 includes a base portion 10, a holder 20, a rotation driver 40, a mover 50 and a transmitter 60 in addition to the plurality of attachment-detachment portions 30. The base portion 10 is attached to an installation surface of the cap attachment-detachment device 100 in the pre-processing device. The holder 20 holds the plurality of attachment-detachment portions 30 with the axes of the plurality of attachment-detachment portions 30 extending in the up-and-down direction.

Each attachment-detachment portion 30 includes an operation portion OP, a restricting portion 32, an opening-closing portion 34 and a buffer portion 35. The operation portion OP includes a driven portion 31 and a grip portion 33. The driven portion 31 includes driven members 31A, 31B having axes that extend in the up-and-down direction and are rotatable about the axes. The driven members 31A, 31B are examples of first and second driven members, respectively. The driven member 31B is arranged below the driven member 31A.

The restricting portion 32 connects the driven member 31A and the driven member 31B to each other such that a torque generated when the driven member 31A is rotated is transmittable to the driven member 31B. The restricting portion 32 includes a one-way friction clutch, for example, and restricts a torque to be transmitted to the driven member 31B to a value equal to or smaller than a prescribed value when the driven member 31B is rotated in a forward direction (clockwise direction, for example). A prescribed torque value is adjustable. On the other hand, the restricting portion 32 does not restrict a torque to be transmitted to the driven member 31B when the driven member 31A is rotated in an opposite direction (counterclockwise direction, for example).

The grip portion 33 has a pair of grip claws 33A, 33B that is openable and closable. When the grip claws 33A, 33B are closed with the cap 2 located between the grip claws 33A, 33B, the cap 2 is gripped. In this state, the grip portion 33 is rotated, so that the cap 2 is attached to or detached from the container 1. The opening-closing portion 34 includes an air cylinder, for example, and opens or closes the grip claws 33A, 33B of the grip portion 33. The opening-closing portion 34 may include another actuator such as a solenoid.

The buffer portion 35 includes a spring member, for example, and holds the grip portion 33 at a lower portion of the driven member 31B such that the grip portion 33 is movable in the up-and-down direction with respect to the driven portion 31 and a torque generated when the driven member 31B is rotated is transmittable to the grip portion 33. With this configuration, in a case in which an upward pressing force equal to or larger than a predetermined value is applied from the cap 2 to a lower portion of the grip portion 33, the pressing force of the grip portion 33 is absorbed by upward movement of the grip portion 33.

The rotation driver 40 includes a single actuator such as an electric motor and has a rotation shaft 41. The rotation driver 40 is fixed to the holder 20, for example. The mover 50 includes a linear-motion ball screw member, for example, and is connected to the base portion 10 and the holder 20. The pitch of the linear-motion ball screw member is the same as the pitch of the cap 2 of Fig. 1. The rotation shaft 41 of the rotation driver 40 is attached to the mover 50. The mover 50 moves the holder 20 in the up-and-down direction with respect to the base portion 10 in response to rotation of the rotation driver 40.

The transmitter 60 is a belt member, for example, and is looped around the driven members 31A of the driven portions 31 of the plurality of attachment-detachment portions 30 and the rotation shaft 41 of the rotation driver 40. Thus, the rotation of the rotation driver 40 is transmitted to the plurality of driven members 31A. The operation portions OP are moved in a downward direction or an upward direction in response to the rotation of the rotation driver 40, and rotate the caps 2 so as to attach the caps 2 to or detach the caps 2 from the corresponding containers 1. In the present embodiment, the downward direction corresponds to a first direction, and the upward direction corresponds to a second direction. An operation of the cap attachment-detachment device 100 will be described below.

### (2) Operation of Cap Attachment-detachment Device

Figs. 3 to 5 are diagrams for explaining the operation of the cap attachment-detachment device 100 when the caps 2 are attached. As shown in Fig. 3, when the caps 2 are attached, the grip portion 33 of each attachment-detachment portion 30 is located above the corresponding container 1 while gripping the cap 2 by closing the grip claws 33A, 33B.

In this state, the rotation driver 40 is rotated in the forward direction. In this case, the holder 20 is moved downwardly with respect to the base portion 10 by the mover 50. Further, the rotation of the rotation driver 40 is transmitted to each attachment-detachment portion 30 by the transmitter 60. Therefore, the grip portion 33 of each attachment-detachment portion 30 is moved downwardly together with the movement of the holder 20 while rotating.

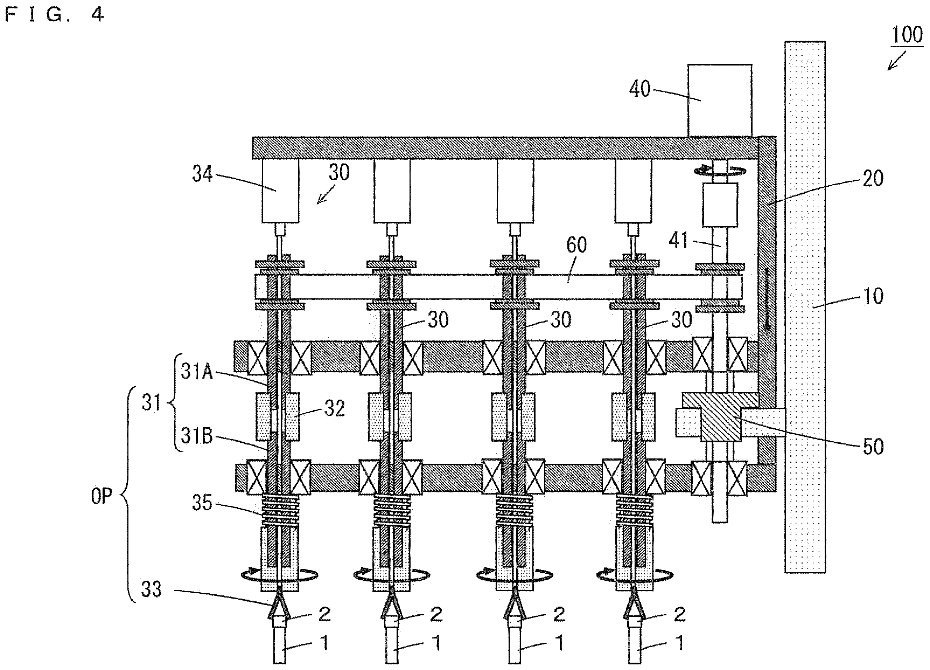

Thereafter, as shown in Fig. 4, the rotation of each grip portion 33 in the forward direction is continued with the cap 2 gripped by each grip portion 33 abutting against the upper end of the corresponding container 1. In this case, the cap 2 is fastened to the container 1. Thus, the plurality of caps 2 are simultaneously and respectively attached to the plurality of containers 1.

Here, even though the plurality of containers 1 are the same type of containers, their dimensions vary. Therefore, points in time at which the plurality of caps 2 abut against the upper ends of the containers 1 vary. Therefore, the container 1 the upper end of which is located uppermost starts to be fastened earlier than the other containers 1. On the other hand, the container 1 the upper end of which is located lowermost starts to be fastened later than the other containers 1.

Even in this case, each grip portion 33 is held by the buffer portion 35 so as to be movable in the up-and-down direction with respect to the driven portion 31. Therefore, in a case in which an upward pressing force that is equal to or larger than a predetermined value is applied to a lower portion of each grip portion 33 due to abutment of the cap 2 against the container 1, the pressing force of each grip portion 33 is absorbed by upward movement of each grip portion 33. Further, when a torque generated when the driven member 31A is rotated in the forward direction reaches a prescribed value, the driven member 31B idles with respect to the driven member 31A due to the restricting portion 32. Thus, the plurality of caps 2 can be fastened uniformly.

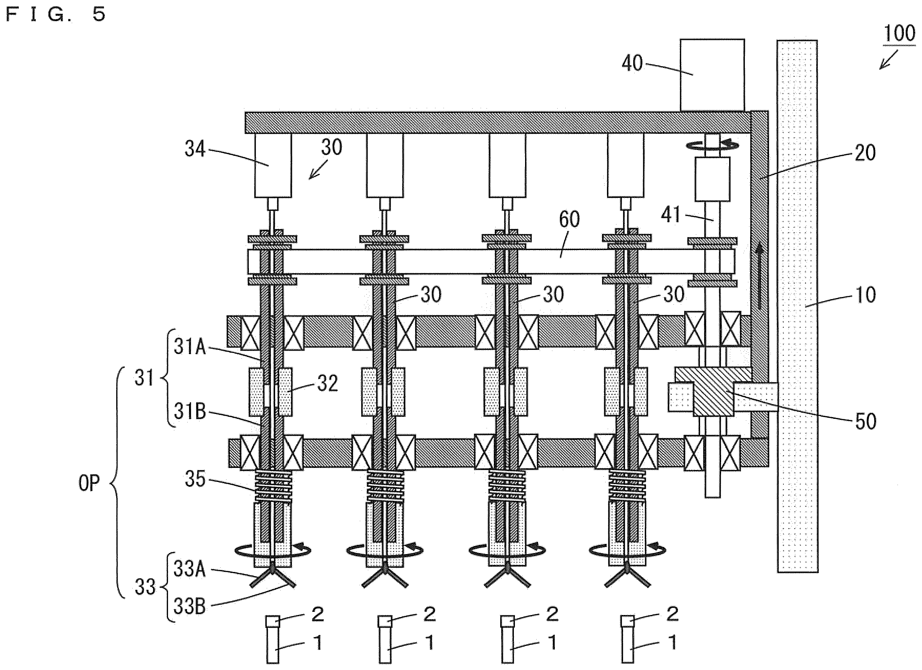

After the caps 2 are attached to the containers 1, the grip claws 33A, 33B of each grip portion 33 are opened as shown in Fig. 5. Thus, gripping of the cap 2 by each grip portion 33 is released. Thereafter, the rotation driver 40 is rotated in the opposite direction. In this case, with each holding portion 33 not gripping the cap 2, the holder 20 is moved upwardly with respect to the base portion 10 by the mover 50. Thus, the operation of attaching the caps 2 ends.

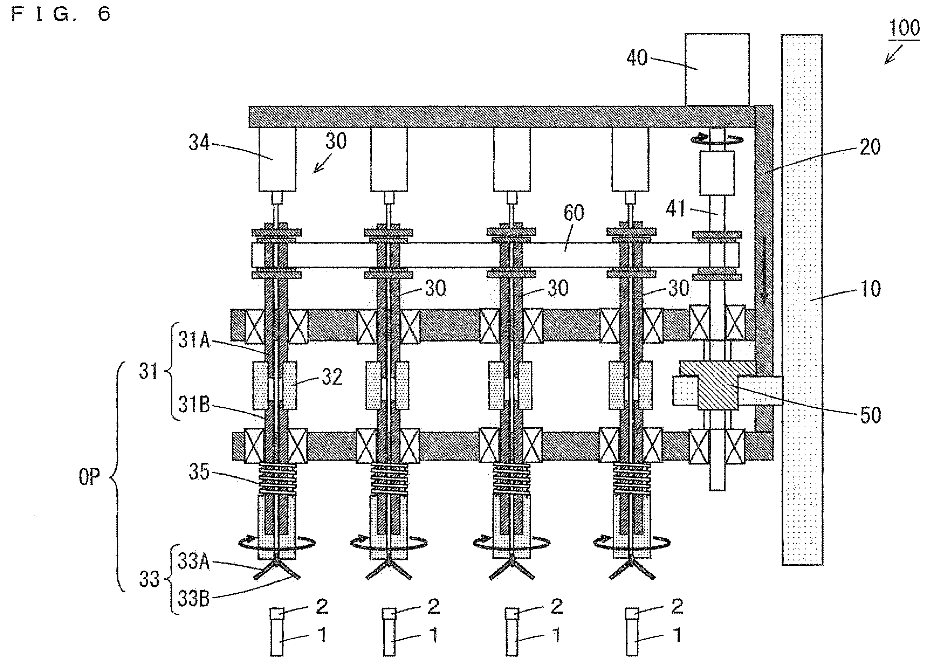

Figs. 6 to 8 are diagrams for explaining the operation of the cap attachment-detachment device 100 when the caps 2 are detached. As shown in Fig. 6, when the caps 2 are detached, the grip portion 33 of each attachment-detachment portion 30 is located above the corresponding container 1 without gripping the cap 2 and with the grip claws 33A, 33B opened. In this state, when the rotation driver 40 is rotated in the forward direction, the grip portion 33 of each attachment-detachment portion 30 moves downwardly together with the movement of the holder 20 while rotating.

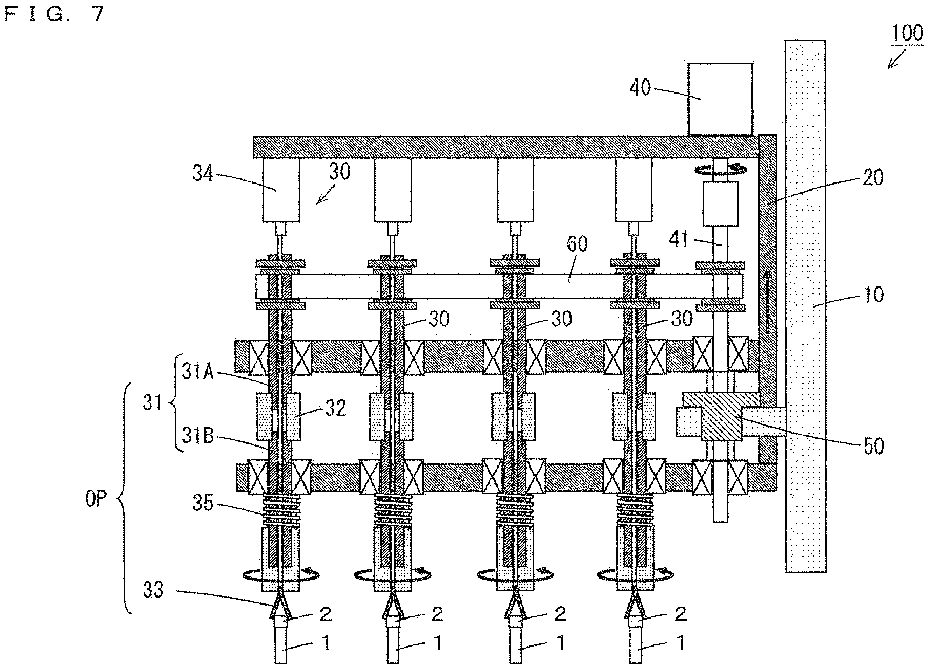

Thereafter, as shown in Fig. 7, the grip claws 33A, 33B are closed with the corresponding cap 2 located between the grip claws 33A, 33B of each grip portion 33, so that the cap 2 is gripped by the attachment-detachment portion 30. In this state, the rotation driver 40 is rotated in the opposite direction. At this time, a torque applied to the cap 2 by each grip portion 33 is not restricted. Therefore, the cap 2 is efficiently loosened from the container 1. Further, the holder 20 is moved upwardly with respect to the base portion 10 by the mover 50. Thus, the plurality of caps 2 are respectively and simultaneously detached from the plurality of containers 1.

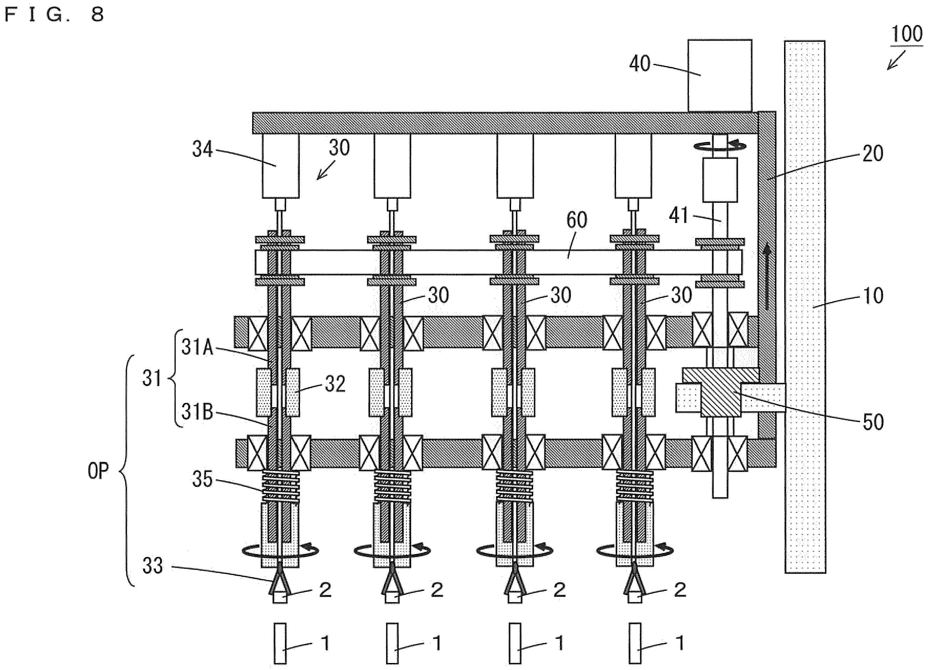

After the caps 2 are detached from the containers 1, the rotation of the grip portions 33 in the opposite direction is continued as shown in Fig. 8. In this case, with each grip portion 33 gripping the cap 2, the holder 20 is moved upwardly with respect to the base portion 10 by the mover 50. Thus, the operation of detaching the caps 2 ends.

### (3) Pre-processing Device

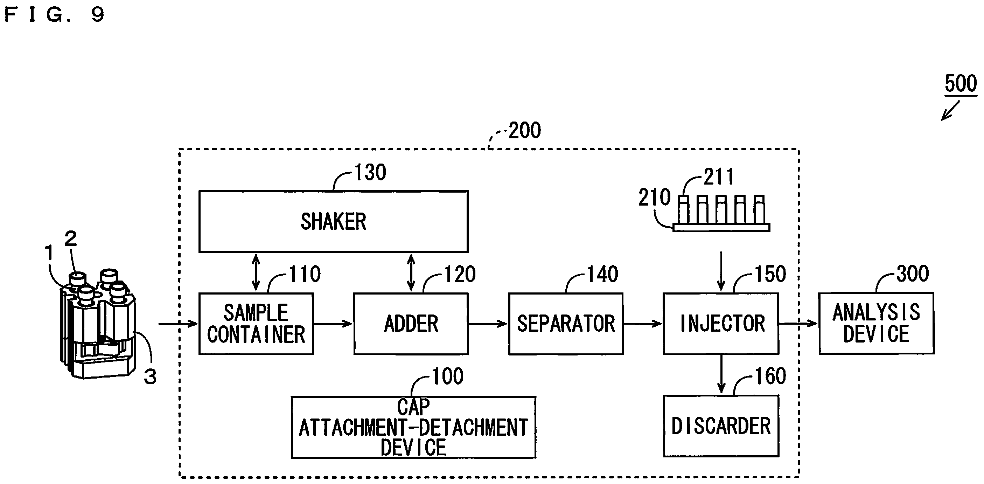

Fig. 9 is a block diagram showing one example of an analysis system including a pre-processing device. As shown in Fig. 9, the analysis system 500 includes the pre-processing device 200 and an analysis device 300. The pre-processing device 200 includes a sample container 110, an adder 120, a shaker 130, a separator 140, an injector 150 and a discarder 160 in addition to the cap attachment-detachment device 100 of Fig. 1. The cap attachment-detachment device 100 is provided in each of the sample container 110, the adder 120 and the injector 150.

A container holding rack 3 that holds the plurality of containers 1 is introduced into the sample container 110. After detaching the cap 2 from each container 1 of the introduced container holding rack 3, the sample container 110 contains a sample to be analyzed in each container 1 and attaches the cap 2 to each container 1. A sample to be analyzed includes food, for example. Thereafter, the sample container 110 carries out the container holding rack 3 into the shaker 130. Further, the sample container 110 carries out the carried container holding rack 3 from the shaker 130 into the adder 120.

After detaching the cap 2 from each container 1 of the container holding rack 3 that has been carried in from the sample container 110, the adder 120 adds a predetermined solvent, an internal standard reagent, etc. to each container and attaches the cap 2 to each container 1. Thereafter, the adder 120 carries out the container holding rack 3 into the shaker 130. Further, the adder 120 carries out the carried container holding rack 3 from the shaker 130 into the separator 140.

After stirring the contents of each container 1 by shaking the container 1 of the container holding rack 3 that has been carried in from the sample container 110, the shaker 130 carries out the container holding rack 3 into the sample container 110. Further, after stirring the contents of each container 1 by shaking the container 1 of the container holding rack 3 that has been carried in from the adder 120, the shaker 130 carries out the container holding rack 3 into the adder 120.

The separator 140 separates the contents of each container 1 into components by applying a centrifugal force to the container 1 of the container holding rack 3 that has been carried in from the adder 120. Thereafter, the separator 140 carries out the container holding rack 3 into the injector 150. The adder 120, the shaker 130 or the separator 140 is an example of a pre-processor that performs pre-processing on samples contained in the plurality of containers 1.

A vial rack 210 holding a plurality of vials 211 for an analysis is introduced into the injector 150. After detaching the cap 2 from each container 1 of the container holding rack 3 that has been carried in from the separator 140, the injector 150 extracts part of the contents from each container 1 and injects the extracted contents into each vial 211 of the vial rack 210. Thus, the contents including a pre-processed sample is contained in each vial 211.

Thereafter, the injector 150 attaches the cap 2 to each container 1 of the container holding rack 3 and carries out the container holding rack 3 into the discarder 160. Further, the injector 150 carries out the vial rack 210 into the analysis device 300. The discarder 160 discards the contents of each container 1 of the container holding rack 3 that has been carried in from the injector 150.

The analysis device 300 performs a predetermined analysis in regard to the contents of each vial 211 of the vial rack 210 that has been carried in from the pre-processing device 200. An analysis includes determining quantity of pesticide residue in food, which is a sample, for example. The analysis device 300 may be a liquid chromatograph mass spectrometer (LC/MS), a gas chromatograph mass spectrometer (GC/MS) or another analysis device, for example.

In each of the sample container 110, the adder 120 and the injector 150 of the pre-processing device 200, it is possible to attach the caps 2 to or detach the caps 2 from the plurality of containers 1 simultaneously and automatically by using the cap attachment-detachment device 100. Thus, throughput can be improved. Further, it can save human labor.

### (4) Modified Example

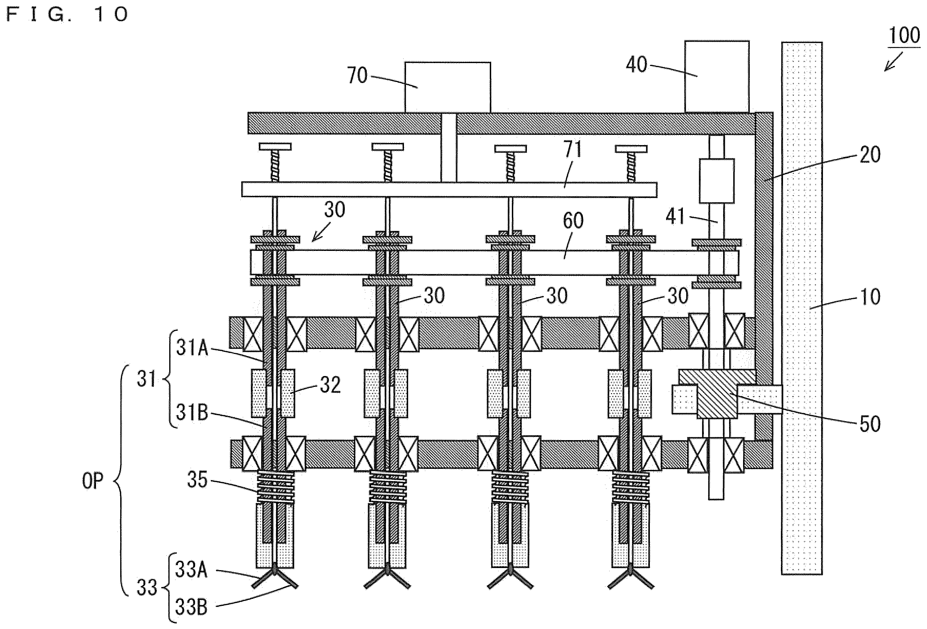

While each attachment-detachment portion 30 includes an opening-closing portion 34 for opening and closing the grip portion 33 in the present embodiment, the embodiment is not limited to this. Fig. 10 is a schematic diagram showing the configuration of a cap attachment-detachment device 100 according to a modified example. As shown in Fig. 10, in the modified example, each attachment-detachment portion 30 does not include the opening-closing portion 34. Further, the cap attachment-detachment device 100 includes an opening-closing portion 70.

The opening-closing portion 70 includes an actuator such as an air cylinder or a solenoid and is fixed to the holder 20, for example. A driving force of the opening-closing portion 70 is transmitted to grip portions 33 of a plurality of attachment-detachment portions 30 via a transmitter 71 such as a belt member. Thus, grip claws 33A, 33B of each attachment-detachment portion 30 are opened or closed.

### (5) Effects

In the cap attachment-detachment device 100 according to the present embodiment, when the rotation driver 40 is driven, the rotation is transmitted to the plurality of attachment-detachment portions 30 via the transmitter 60. Thus, it is possible to move the grip portion 33 of each attachment-detachment portion 30 in the up-and-down direction and rotates a cap 2 to attach the cap 2 to or detach the cap 2 from a corresponding container 1 by using the single rotation driver 40. Here, when the cap 2 is attached to the container 1, a pressing force applied from the cap 2 to the grip portion 33 is absorbed by the buffer portion 35. Further, when the cap 2 is attached to the container 1, a torque applied to the cap 2 by the grip portion 33 is restricted by the restricting portion 32.

With this configuration, even in a case in which the dimensions of the plurality of containers 1 vary, the attachment-detachment portions 30 can absorb the variations and attach the caps 2 to the containers 1 with a constant torque. Further, because the plurality of caps 2 can be fastened uniformly to be attached to the plurality of containers 1, a problem such as liquid leakage due to insufficient fastening does not occur. As a result, the plurality of caps 2 can be attached or detached appropriately and simultaneously.

### (6) Other Embodiments

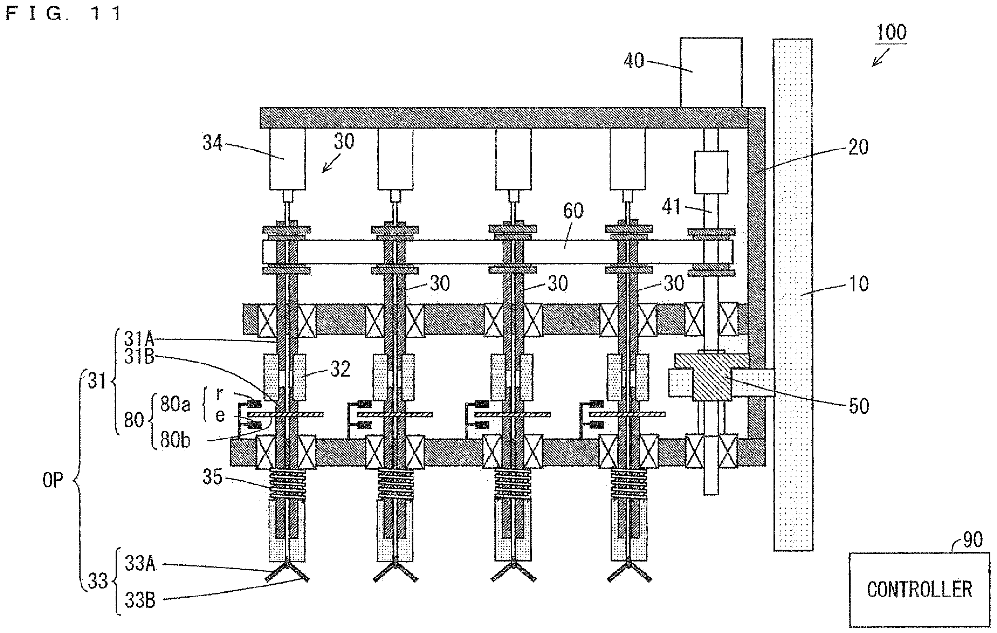

Fig. 11 is a schematic diagram showing the configuration of a cap attachment-detachment device according to another embodiment. The cap attachment-detachment device 100 of Fig. 11 further includes a plurality of rotation detectors 80 and a controller 90 in addition to the configuration of the cap attachment-detachment device 100 of Fig. 1. The plurality of rotation detectors 80 are provided to correspond to the plurality of driven members 31B of the driven portions 31 of the operation portions OP.

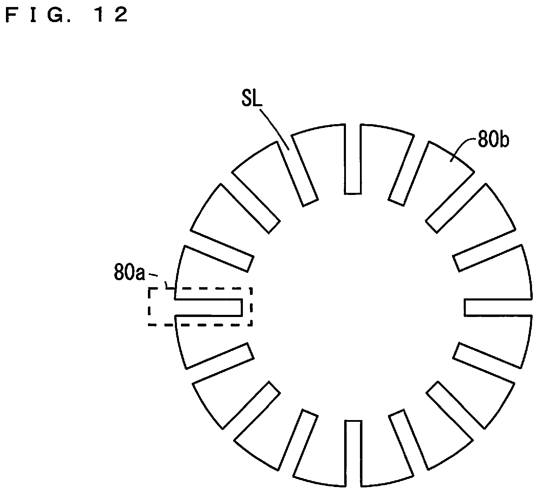

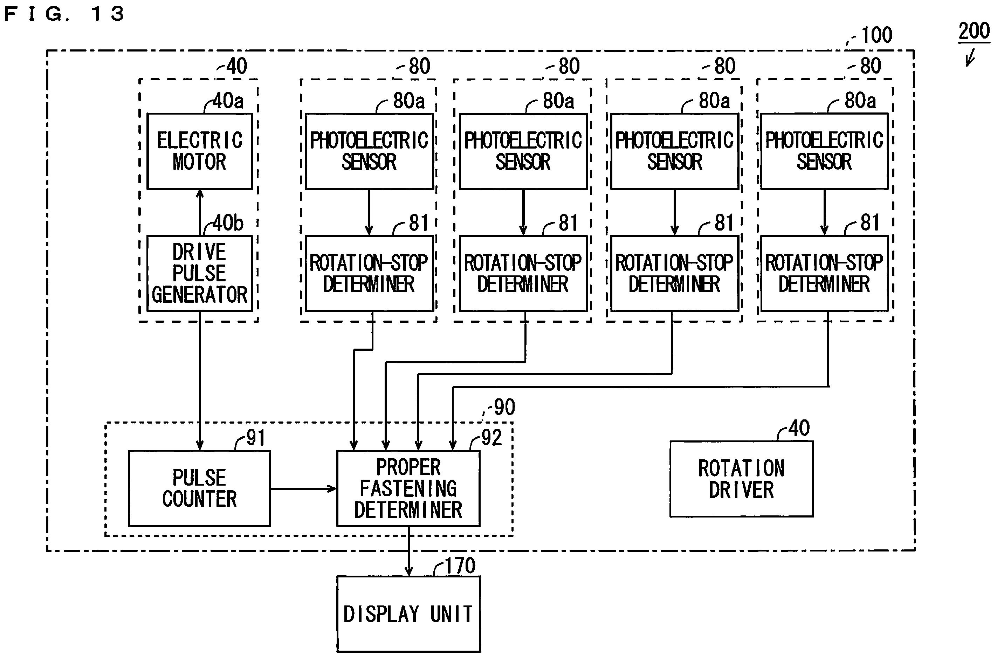

Each rotation detector 80 includes a photoelectric sensor 80a, a light-shielding plate 80b and a rotation-stop determiner 81 (see Fig. 13). Fig. 12 is a schematic plan view showing the positional relationship between the photoelectric sensor 80a and the light-shielding plate 80b included in each rotation detector 80. As shown in Fig. 12, the light-shielding plate 80b is formed in a disc shape. Further, in the light-shielding plate 80b, a plurality of slits SLs are provided at equal angular intervals. The slit SLs of each light-shielding plate 80b extend in a radial direction from the outer periphery toward the center portion of the light-shielding plate 80b.

As shown in Fig. 11, each light-shielding plate 80b is attached to each driven member 31B. The photoelectric sensor 80a includes an emitter e and a light receiver r. The emitter emits laser light, for example, and the light receiver receives the laser light emitted by the emitter. Further, the emitter e and the light receiver r of the photoelectric sensor 80a are provided so as to interpose the peripheral edge of the light-shielding plate 80b therebetween.

Here, in a case in which the driven member 31B is rotating, the laser light emitted by the emitter e intermittently enters the light receiver r through the plurality of slits SLs in response to the rotation of the driven member 31B. In a case in which the driven member 31B is not rotating, the laser light emitted by the emitter e continuously enters the light receiver r through the plurality of slits SLs or shielded by the light-shielding plate 80b. Thus, the rotation-stop determiner 81 of each rotation detector 80 detects whether the driven member 31B of the corresponding operation portion OP is rotating based on the laser light received by the light receiver r. Hereinafter, an operation of detecting rotation of the driven member 31B by the rotation-stop determiner 81 of the rotation detector 80 is referred to as a rotation detecting operation.

Fig. 13 is a block diagram showing the functional configuration of a control system of the cap attachment-detachment device 100 of Fig. 11. The controller 90 includes a pulse counter 91 and a proper fastening determiner 92. The proper fastening determiner 92 is an example of a determiner.

In the present embodiment, the controller 90 is constituted by a CPU (Central Processing Unit), a ROM (Read Only Memory), a RAM (Random Access Memory) and a storage device, for example. A proper fastening determination program for performing a proper fastening determining operation, described below, is stored in the ROM or a storage device included in the controller 90. Each constituent element (91, 92) of the controller 90 is implemented by execution of a computer program such as the proper fastening determination program stored in the ROM or the storage device on the RAM. Part or all of the constituent elements (91, 92) of the controller 90 may be constituted by hardware such as an electronic circuit.

In the present embodiment, the rotation driver 40 includes an electric motor 40a and a drive pulse generator 40b. The drive pulse generator 40b applies a drive pulse for controlling driving of the electric motor 40a to the electric motor 40a. The electric motor 40a is rotated in response to a drive pulse.

Each rotation-stop determiner 81 of each rotation detector 80 determines whether each driven member 31B of Fig. 11 is rotating based on a signal output from each photoelectric sensor 80a. Further, the rotation-stop determiner 81 provides a determination signal indicating whether the driven member 31B is rotating to the proper fastening determiner 92.

The pulse counter 91 counts the number of drive pulses provided from the drive pulse generator 40b of the rotation driver 40 to the electric motor 40a. The proper fastening determiner 92 determines whether a cap 2 (not shown) is properly attached to a container 1 (not shown) based on the count of drive pulses generated by the drive pulse generator 40b and a determination signal provided from each rotation-stop determiner 81 of each rotation detector 80. Specifically, the proper fastening determiner 92 determines whether each cap 2 (not shown) is properly attached to each container 1 (not shown) based on a determination signal provided from each rotation-stop determiner 81 when the count of drive pulses generated by the drive pulse generator 40b is in a predetermined allowable range. The predetermined allowable range is a range in regard to the count of drive pulses to be generated by the drive pulse generator 40b in a case in which the cap 2 can be properly fastened to the container 1. The predetermined allowable range may be set based on an operation of fastening a cap 2 of a cap attachment-detachment device 100 which is experimentally performed in advance.

The proper fastening determiner 92 may determine whether each cap 2 is properly attached to each container 1 based on a determination signal that is provided from each rotation-stop determiner 81 in an allowable period of time that is set as a period from start of rotation of the electric motor 40a to a point in time at which a certain period of time has elapsed from the start of rotation of the electric motor 40a. In this case, the allowable period of time is described in the proper fastening determination program.

The pre-processing device 200 (see Fig. 9) further includes a display unit 170. The display unit 170 includes a liquid crystal display device or an organic electroluminescence display device, for example. A warning indicating that a cap 2 is not properly attached to any one of the containers 1 is displayed on the display unit 170. Hereinafter, an operation of determining whether a cap 2 is properly fastened to a container 1 is referred to as a proper fastening determining operation.

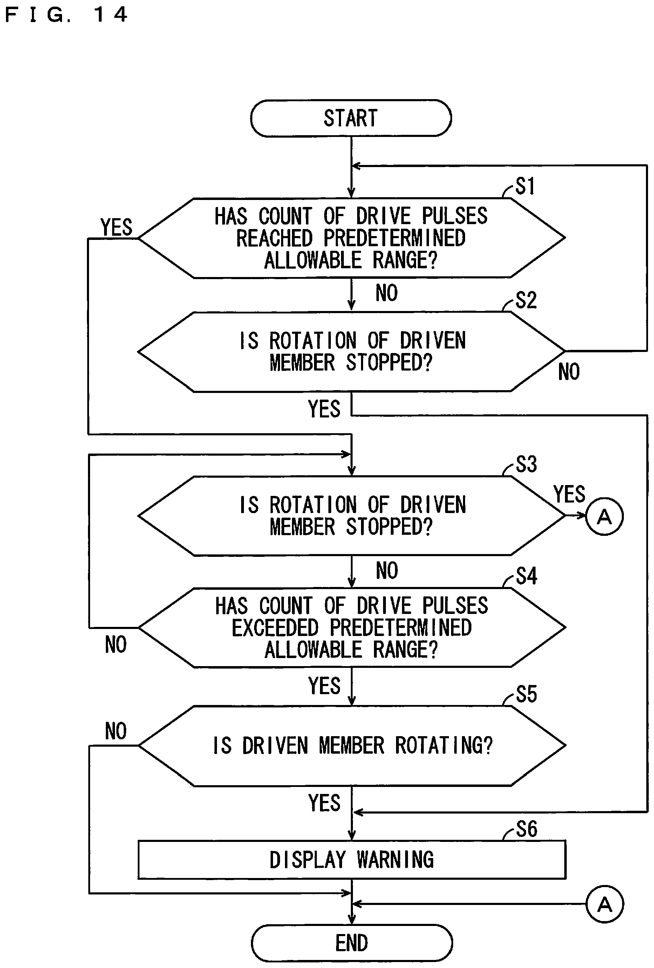

One example of the proper fastening determining operation performed by the proper fastening determiner 92 of the controller 90 will be described. Fig. 14 is a flowchart showing one example of the proper fastening determining operation performed by the proper fastening determiner 92 of the controller 90 of Fig. 12. While the proper fastening determining operation corresponding to one driven member 31B out of the plurality of driven members 31B is shown in Fig. 14, the proper fastening determining operation corresponding to the other driven members 31B is similar to the operation shown in Fig. 14.

First, in the cap attachment-detachment device 100, the operation of attaching a cap 2 shown in Figs. 3 to 5 is started. In this state, the proper fastening determiner 92 determines whether the count of drive pulses generated by the drive pulse generator 40b has reached a predetermined allowable range (step S1). In a case in which the count of drive pulses generated by the drive pulse generator 40b has not reached the allowable range, the proper fastening determiner 92 determines whether the stop of rotation of a corresponding driven member 31B is detected based on a determination signal of the corresponding rotation-stop determiner 81 (step S2). Here, in a case in which the stop of rotation of the corresponding driven member 31B is detected, the proper fastening determiner 92 determines that the cap 2 is not properly fastened to the corresponding container 1.

In this case, the proper fastening determiner 92 causes the display unit 170 to display a warning indicating that the cap 2 is not properly fastened to the corresponding container 1 (step S6). In the step S2, in a case in which the stop of rotation of the corresponding driven member 31B is not detected, the proper fastening determiner 92 returns to the step S1.

In the step S1, in a case in which the count of drive pulses generated by the drive pulse generator 40b has reached the allowable range (the count of drive pulses generated by the drive pulse generator 40b is in the allowable range), the proper fastening determiner 92 determines whether the stop of rotation of the corresponding driven member 31B is detected based on a determination signal of a corresponding rotation-stop determiner 81 (step S3). Here, in a case in which the stop of rotation of the corresponding driven member 31B is detected, the proper fastening determiner 92 determines that a cap 2 is properly fastened to a container 1. In this case, the proper fastening determining operation in regard to the corresponding driven member 31B ends.

In the step S3, in a case in which the stop of rotation of the corresponding driven member 31B is not detected, the proper fastening determiner 92 determines whether the count of drive pulses generated by the drive pulse generator 40b has exceeded the allowable range (step S4). In a case in which the count of drive pulses generated by the drive pulse generator 40b has not exceeded the allowable range (the count of drive pulses generated by the drive pulse generator 40b is in the allowable range), the proper fastening determiner 92 returns to the step S3. In a case in which the count of drive pulses generated by the drive pulse generator 40b has exceeded the allowable range (the count of drive pulses generated by the drive pulse generator 40b is larger than the upper limit of the allowable range), the proper fastening determiner 92 determines whether the rotation of the corresponding driven member 31B is detected based on a determination signal of the corresponding rotation-stop determiner 81 (step S5).

Here, in a case in which rotation of the corresponding driven member 31B is detected, the proper fastening determiner 92 determines that the cap 2 is not properly fastened to the container 1. In this case, the proper fastening determiner 92 causes the display unit 170 to display a warning indicating that the cap 2 is not properly fastened to the container 1 (step S6). In a case in which rotation of the corresponding driven member 31B is not detected, the proper fastening determiner 92 determines that the cap 2 is properly attached to the container 1. In this case, the proper fastening determining operation in regard to the corresponding driven member 31B ends.

In the cap attachment-detachment device 100, when inclination or positional deviation of the container 1 or the cap 2 occurs, for example, the screw of the container 1 and the screw of the cap 2 may not be engaged with each other accurately. In such a state, in a case in which a torque generated when the driven member 31A is rotated in the forward direction reaches a prescribed value, rotation of the driven member 31A is stopped. Further, in a case in which a container 1 is not held below each cap 2, for example, a driven member 31A continues to be rotated with a grip portion 33 holding a cap 2. In this case, although the cap 2 is not properly fastened to the container 1, fastening of the cap 2 to the container 1 ends.

In the cap attachment-detachment device 100 of Fig. 11, in the above-mentioned case, it is displayed as a warning that the cap 2 is not properly fastened to the container 1. Therefore, a user can identify that the cap 2 is not properly fastened to any of the containers 1. On the other hand, when fastening of all the containers 1 ends without a warning, it can be determined that all the containers 1 are appropriately fastened.

### (7) Aspects

It is understood by those skilled in the art that the plurality of above-mentioned illustrative embodiments are specific examples of the below-mentioned aspects.

(Item 1) A cap attachment-detachment device according to one aspect may include a rotation driver, a plurality of attachment-detachment portions corresponding to a plurality of containers, and a transmitter that transmits rotation of the rotation driver to the plurality of attachment-detachment portions, wherein each of the plurality of attachment-detachment portions may include an operation portion that moves in a first direction or a second direction that is opposite to the first direction in response to rotation of the rotation driver and rotates a cap to attach the cap to or detach the cap from a corresponding container, and a restricting portion that restricts a torque to be applied to the cap by the operation portion when the cap is attached to the container.

In the cap attachment-detachment device, when the rotation driver is driven, the rotation is transmitted to the plurality of attachment-detachment portions via the transmitter. Thus, it is possible to move the operation portion of each attachment-detachment portion in one direction and rotates a cap to attach the cap to or detach the cap from a corresponding container by using the single rotation driver. Further, when the cap is attached to the container, a torque applied to the cap by the operation portion is restricted by the restricting portion.

With this configuration, even in a case in which the dimensions of the plurality of containers vary, the attachment-detachment portions can absorb the variations and attach the caps to the containers with a constant torque. Further, because the plurality of caps can be fastened uniformly to be attached to the plurality of containers, a problem such as liquid leakage due to insufficient fastening does not occur. As a result, the plurality of caps can be attached or detached appropriately and simultaneously.

(Item 2) The cap attachment-detachment device according to item 1, wherein each of the plurality of operation portions may further include a grip portion that grips the cap, and a driven portion that is rotated when the grip portion is connected and rotation of the rotation driver is transmitted by the transmitter.

In this case, it is possible to easily rotate the operation portion to attach the cap to or detach the cap from the container in response to rotation of the rotation driver.

(Item 3) The cap attachment-detachment device according to item 2, wherein each driven portion may include a first driven member to which rotation of the rotation driver is transmitted by the transmitter, and a second driven member to which the grip portion is connected, wherein each restricting portion may connect the first driven member and the second driven member to each other such that a torque transmitted from the first driven member to the second driven member is restricted when the cap is attached to the container.

In this case, when the cap is attached to the container, the restricting portion can easily restrict a torque to be applied to the cap by the operation portion.

(Item 4) The cap attachment-detachment device according to any one of items 1 to 3 may further include a rotation detector that detects rotation of the operation portion, and a determiner that determines whether the cap is properly fastened to the container based on a result of detection by the rotation detector.

In this case, when the cap is properly fastened to each container, a torque transmitted to the operation portion is restricted. Thus, the rotation of the operation portion is stopped at a certain point in time. With the above-mentioned configuration, whether each cap is properly fastened to each container can be determined based on a result of detection of the rotation detector. Thus, a user can identify whether the cap is properly fastened to each container.

(Item 5) The cap attachment-detachment device according to item 4, wherein the rotation driver may include a drive pulse generator that generates a drive pulse, and an electric motor that is rotated based on a drive pulse generated by the drive pulse generator, and the determiner may determine whether the cap is properly fastened to the container based on a count of drive pulses generated by the drive pulse generator and a result of detection by the rotation detector.

In this case, the count of drive pulses applied to the electric motor for rotation of the first driven member is used as a means for determining a point in time at which the rotation of the second driven member is stopped. Therefore, it is possible to determine whether each cap is properly fastened to each container without an extra configuration.

(Item 6) The cap attachment-detachment device according to item 5, wherein the determiner may determine whether the cap is properly fastened based on a result of detection by the rotation detector when a count of drive pulses generated by the drive pulse generator is in a predetermined allowable range in which the cap is properly fastenable to the container.

In a case in which each cap is properly fastened to each container, rotation of the second driven member is stopped when the count of drive pulses reaches a predetermined allowable range. Therefore, whether the cap is properly fastened can be determined based on a result of detection by the rotation detector when the count of drive pulses is in the allowable range.

(Item 7) The cap attachment-detachment device according to item 6, wherein the determiner may determine that the cap is properly fastened in a case in which rotation of a second driven member is detected by the rotation detector when a count of driven pulses generated by the drive pulse generator does not reach the allowable range, and a stop of the second driven member is detected by the rotation detector when a count of pulses is in the allowable range.

In a case in which each cap is properly fastened to each container, rotation of the second driven member continues until the count of drive pulses reaches the allowable range, and rotation of the second driven member is stopped when the count of drive pulses reaches the allowable range. Therefore, with the above-mentioned configuration, in a case in which the rotation of the second driven member is detected when the count of drive pulses has not reached the allowable range, and the stop of the second driven member is detected when the count of pulses is in the allowable range, it can be determined that the cap is properly attached.

(Item 8) The cap attachment-detachment device according to item 6 or 7, wherein the determiner may determine that the cap is not properly fastened in a case in which a stop of a second driven member is detected by the rotation detector when a count of drive pulses generated by the drive pulse generator is smaller than a lower limit of the allowable range.

In a case in which each container and each cap are not accurately engaged with each other, rotation of the second driven member is stopped before the count of driving pulses reaches the allowable range. Therefore, in a case in which the stop of the second driven member is detected when the count of drive pulses is smaller than the lower limit of the allowable range, it can be determined that the cap is not properly attached.

(Item 9) The cap attachment-detachment device according to any one of items 6 to 8, wherein the determiner may determine that the cap is not properly fastened in a case in which rotation of a second driven member is detected by the rotation detector when a count of drive pulses generated by the drive pulse generator is larger than an upper limit of the allowable range.

In a case in which no cap to be attached or detached by each attachment-detachment portion or no container is present, the rotation of the second driven member continues even when the count of drive pulses exceeds the upper limit of the allowable range. Therefore, in a case in which the rotation of the second driven member is detected when the count of drive pulses is larger than the upper limit of the allowable range, it can be determined that the cap is not properly attached.

(Item 10) The cap attachment-detachment device according to any one of items 1 to 9 may further include a buffer portion that absorbs a pressing force applied from the cap to the operation portion when the cap is attached to the container.

In this case, when the cap is attached to the container, a pressing force applied from the cap to the operation portion is absorbed by the buffer portion.

(Item 11) The cap attachment-detachment device according to item 10, wherein the buffer portion may movably hold the operation portion in the second direction with respect to the cap.

In this case, the buffer portion can easily absorb a pressing force applied from the cap to the operation portion when the cap is attached to the container.

(Item 12) The cap attachment-detachment device according to any one of items 1 to 11, wherein the restricting portion does not have to restrict a torque to be applied to the cap by the operation portion when the cap is detached from the container.

In this case, the plurality of attachment-detachment portions can be simultaneously and efficiently detach the plurality of caps from the plurality of containers.

(Item 13) The cap attachment-detachment device according to any one of items 1 to 11, may further include a base portion, a holder that holds the plurality of attachment-detachment portions, and a mover that moves the holder with respect to the base portion in the first or second direction in response to rotation of the rotation driver.

In this case, the plurality of operation portions can be easily moved in one direction in response to rotation of the rotation driver.

(Item 14) The cap attachment-detachment device according to item 13, wherein the cap may include a screw cap, and the mover may include a linear-motion ball screw member having a same pitch as that of the screw cap.

In this case, with a simple configuration, it is possible to move the operation portion in one direction while rotating the operation portion using a single rotation driver such that a screw cap can be attached or detached.

(Item 15) The cap attachment-detachment device according to any one of items 1 to 14, wherein the restricting portion may include a friction clutch.

In this case, a torque applied to a cap can be restricted with a simple configuration.

(Item 16) The cap attachment-detachment device according to any one of items 1 to 15, wherein the buffer portion may include a spring member.

In this case, a pressing force of an operation portion applied to a cap can be absorbed with a simple configuration.

(Item 17) A pre-processing device according to another aspect may include the cap attachment-detachment device according to any one of items 1 to 17 that simultaneously attaches a plurality of caps to or detaches the plurality of caps from a plurality of containers, and a pre-processor that performs pre-processing on samples contained in the plurality of containers.

In the pre-processing device, the caps 2 can be attached to and detached from the plurality of containers simultaneously and automatically by the above-mentioned cap attachment-detachment device. Thus, throughput can be improved. Further, it can save human labor.

## Claims

1. A cap attachment-detachment device (100) comprising:
a rotation driver (40);
a plurality of attachment-detachment portions (30) corresponding to a plurality of containers (1); and
a transmitter (60) that transmits rotation of the rotation driver (40) to the plurality of attachment-detachment portions (30), wherein
each of the plurality of attachment-detachment portions (30) includes an operation portion (OP) that moves in a first direction or a second direction that is opposite to the first direction in response to rotation of the rotation driver (40) and rotates a cap (2) to attach the cap (2) to or detach the cap (2) from a corresponding container (1), and a restricting portion (32) that restricts a torque to be applied to the cap (2) by the operation portion (OP) when the cap (2) is attached to the container (1), and **characterized in that** the cap attachment-detachment device (100) further comprises:
a rotation detector (80) that detects rotation of the operation portion (OP); and
a determiner that determines whether the cap (2) is properly fastened to the container (1) based on a result of detection by the rotation detector (80), wherein
the rotation driver (40) includes
a drive pulse generator (40b) that generates a drive pulse, and
an electric motor (40a) that is rotated based on a drive pulse generated by the drive pulse generator (40b), and
the determiner determines whether the cap (2) is properly fastened to the container (1) based on a count of drive pulses generated by the drive pulse generator (40b) and a result of detection by the rotation detector (80).

2. The cap attachment-detachment device (100) according to claim 1, wherein
each of the plurality of operation portions (OP) includes
a grip portion (33) that grips the cap (2), and a driven portion (31) that is rotated when the grip portion (33) is connected and rotation of the rotation driver (40) is transmitted by the transmitter (60).

3. The cap attachment-detachment device (100) according to claim 2, wherein
each driven portion (31) includes
a first driven member to which rotation of the rotation driver (40) is transmitted by the transmitter (60), and
a second driven member to which the grip portion (33) is connected, wherein
each restricting portion (32) connects the first driven member and the second driven member to each other such that a torque transmitted from the first driven member to the second driven member is restricted when the cap (2) is attached to the container (1).

4. The cap attachment-detachment device (100) according to any one of claims 1 to 3, wherein
the determiner determines whether the cap (2) is properly fastened based on a result of detection by the rotation detector (80) when a count of drive pulses generated by the drive pulse generator (40b) is in a predetermined allowable range in which the cap (2) is properly fastenable to the container (1).

5. The cap attachment-detachment device (100) according to claim 4, wherein
the determiner determines that the cap (2) is properly fastened in a case in which rotation of a second driven member is detected by the rotation detector (80) when a count of driven pulses generated by the drive pulse generator (40b) does not reach the allowable range, and a stop of the second driven member is detected by the rotation detector (80) when a count of pulses is in the allowable range.

6. The cap attachment-detachment device (100) according to claim 4 or 5, wherein
the determiner determines that the cap (2) is not properly fastened in a case in which a stop of a second driven member is detected by the rotation detector (80) when a count of drive pulses generated by the drive pulse generator (40b) is smaller than a lower limit of the allowable range.

7. The cap attachment-detachment device (100) according to any one of claims 4 to 6, wherein
the determiner determines that the cap (2) is not properly fastened in a case in which rotation of a second driven member is detected by the rotation detector (80) when a count of drive pulses generated by the drive pulse generator (40b) is larger than an upper limit of the allowable range.

8. The cap attachment-detachment device (100) according to any one of claims 1 to 7, further comprising a buffer portion (35) that absorbs a pressing force applied from the cap (2) to the operation portion (OP) when the cap (2) is attached to the container (1).

9. The cap attachment-detachment device (100) according to claim 8, wherein
the buffer portion (35) movably holds the operation portion (OP) in the second direction with respect to the cap (2).

10. The cap attachment-detachment device (100) according to any one of claims 1 to 9, wherein
the restricting portion (32) does not restrict a torque to be applied to the cap (2) by the operation portion (OP) when the cap (2) is detached from the container (1).

11. The cap attachment-detachment device (100) according to any one of claims 1 to 9, further comprising:
a base portion (10);
a holder (20) that holds the plurality of attachment-detachment portions (30); and
a mover (50) that moves the holder (20) with respect to the base portion (10) in the first or second direction in response to rotation of the rotation driver (40).

12. The cap attachment-detachment device (100) according to claim 11, wherein
the cap (2) includes a screw cap, and
the mover (50) includes a linear-motion ball screw member having a same pitch as that of the screw cap.

13. A pre-processing device comprising:
the cap attachment-detachment device (100) according to any one of claims 1 to 12 that simultaneously attaches a plurality of caps (2) to or detaches the plurality of caps (2) from a plurality of containers (1); and
a pre-processor that performs pre-processing on samples contained in the plurality of containers (1).

## Patentansprüche

1. Vorrichtung (100) zum Anbringen und Abnehmen von Kappen umfassend:
einen Rotationstreiber (40);
eine Vielzahl von Abschnitten (30) zum Anbringen und Abnehmen entsprechend einer Vielzahl von Behältern (1); und
eine Übertragungsvorrichtung (60), die die Rotation des Rotationstreibers (40) auf die Vielzahl von Abschnitten (30) zum Anbringen und Abnehmen überträgt, wobei
jeder der Vielzahl von Abschnitten (30) zum Anbringen und Abnehmen einen Betätigungsabschnitt (OP), der sich in einer ersten Richtung oder einer zweiten Richtung, die der ersten Richtung entgegengesetzt ist, als Reaktion auf die Rotation des Rotationstreibers (40) bewegt und eine Kappe (2) dreht, um die Kappe (2) an einem entsprechenden Behälter (1) anzubringen oder von diesem abzunehmen, und einen Beschränkungsabschnitt (32), der ein Drehmoment beschränkt, das auf die Kappe (2) durch den Betätigungsabschnitt (OP) aufzubringen ist, wenn die Kappe (2) an dem Behälter (1) angebracht wird, einschließt, und **dadurch gekennzeichnet, dass** die Vorrichtung (100) zum Anbringen und Abnehmen von Kappen ferner Folgendes umfasst:
einen Rotationsdetektor (80), der die Rotation des Betätigungsabschnitts (OP) erfasst; und
einen Bestimmer, der basierend auf einem Erfassungsergebnis durch den Rotationsdetektor (80) bestimmt, ob die Kappe (2) richtig an dem Behälter (1) befestigt ist,
wobei der Rotationstreiber (40) Folgendes einschließt:
einen Antriebsimpulsgenerator (40b), der einen Antriebsimpuls erzeugt, und
einen Elektromotor (40a), der basierend auf einem Antriebsimpuls gedreht wird, der von dem Antriebsimpulsgenerator (40b) erzeugt wird, und
der Bestimmer basierend auf einer Anzahl von Antriebsimpulsen, die von dem Antriebsimpulsgenerator (40b) erzeugt werden, und einem Erfassungsergebnis durch den Rotationsdetektor (80) bestimmt, ob die Kappe (2) richtig an dem Behälter (1) befestigt ist.

2. Vorrichtung (100) zum Anbringen und Abnehmen von Kappen nach Anspruch 1, wobei
jeder der Vielzahl von Betätigungsabschnitten (OP) Folgendes einschließt:
einen Greifabschnitt (33), der die Kappe (2) ergreift, und einen angetriebenen Abschnitt (31), der gedreht wird, wenn der Greifabschnitt (33) verbunden ist und die Rotation des Rotationstreibers (40) von der Übertragungsvorrichtung (60) übertragen wird.

3. Vorrichtung (100) zum Anbringen und Abnehmen von Kappen nach Anspruch 2, wobei
jeder angetriebene Abschnitt (31) Folgendes einschließt:
ein erstes angetriebenes Element, auf welches die Rotation des Rotationstreibers (40) von der Übertragungsvorrichtung (60) übertragen wird, und
ein zweites angetriebenes Element, mit welchem der Greifabschnitt (33) verbunden ist, wobei
jeder Beschränkungsabschnitt (32) das erste angetriebene Element und das zweite angetriebene Element so miteinander verbindet, dass ein Drehmoment, das von dem ersten angetriebenen Element auf das zweite angetriebene Element übertragen wird, beschränkt wird, wenn die Kappe (2) an dem Behälter (1) angebracht wird.

4. Vorrichtung (100) zum Anbringen und Abnehmen von Kappen nach einem der Ansprüche 1 bis 3, wobei
der Bestimmer basierend auf einem Erfassungsergebnis durch den Rotationsdetektor (80), wenn sich eine Anzahl von Antriebsimpulsen, die von dem Antriebsimpulsgenerator (40b) erzeugt werden, in einem vorgegebenen zulässigen Bereich befindet, in welchem die Kappe (2) richtig an dem Behälter (1) befestigt werden kann, bestimmt, ob die Kappe (2) richtig befestigt ist.

5. Vorrichtung (100) zum Anbringen und Abnehmen von Kappen nach Anspruch 4, wobei
der Bestimmer in einem Fall, in welchem die Rotation eines zweiten angetriebenen Elements von dem Rotationsdetektor (80) erfasst wird, wenn eine Anzahl von angetriebenen Impulsen, die von dem Antriebsimpulsgenerator (40b) erzeugt werden, den zulässigen Bereich nicht erreicht, bestimmt, dass die Kappe (2) richtig befestigt ist, und ein Stopp des zweiten angetriebenen Elements von dem Rotationsdetektor (80) erfasst wird, wenn sich eine Anzahl von Impulsen in dem zulässigen Bereich befindet.

6. Vorrichtung (100) zum Anbringen und Abnehmen von Kappen nach Anspruch 4 oder 5, wobei
der Bestimmer in einem Fall, in welchem ein Stopp eines zweiten angetriebenen Elements von dem Rotationsdetektor (80) erfasst wird, wenn eine Anzahl von Antriebsimpulsen, die von dem Antriebsimpulsgenerator (40b) erzeugt werden, kleiner als eine untere Grenze des zulässigen Bereichs ist, bestimmt, dass die Kappe (2) nicht richtig befestigt ist.

7. Vorrichtung (100) zum Anbringen und Abnehmen von Kappen nach einem der Ansprüche 4 bis 6, wobei
der Bestimmer in einem Fall, in welchem die Rotation eines zweiten angetriebenen Elements von dem Rotationsdetektor (80) erfasst wird, wenn sich eine Anzahl von Antriebsimpulsen, die von dem Antriebsimpulsgenerator (40b) erzeugt werden, größer als eine obere Grenze des zulässigen Bereichs ist, bestimmt, dass die Kappe (2) nicht richtig befestigt ist.

8. Vorrichtung (100) zum Anbringen und Abnehmen von Kappen nach einem der Ansprüche 1 bis 7, ferner umfassend einen Pufferabschnitt (35), der eine Druckkraft absorbiert, die von der Kappe (2) auf den Betätigungsabschnitt (OP) aufgebracht wird, wenn die Kappe (2) an dem Behälter (1) angebracht wird.

9. Vorrichtung (100) zum Anbringen und Abnehmen von Kappen nach Anspruch 8, wobei
der Pufferabschnitt (35) den Betätigungsabschnitt (OP) beweglich in der zweiten Richtung bezüglich der Kappe (2) hält.

10. Vorrichtung (100) zum Anbringen und Abnehmen von Kappen nach einem der Ansprüche 1 bis 9, wobei
der Beschränkungsabschnitt (32) ein Drehmoment, das auf die Kappe (2) durch den Betätigungsabschnitt (OP) aufzubringen ist, nicht beschränkt, wenn die Kappe (2) von dem Behälter (1) abgenommen wird.

11. Vorrichtung (100) zum Anbringen und Abnehmen von Kappen nach einem der Ansprüche 1 bis 9, ferner umfassend:
einen Bodenabschnitt (10);
eine Halterung (20), die die Vielzahl von Abschnitten (30) zum Anbringen und Abnehmen hält; und
einen Beweger (50), der die Halterung (20) bezüglich des Bodenabschnitts (10) in der ersten oder der zweiten Richtung als Reaktion auf die Rotation des Rotationstreibers (40) bewegt.

12. Vorrichtung (100) zum Anbringen und Abnehmen von Kappen nach Anspruch 11, wobei
die Kappe (2) eine Schraubkappe einschließt, und
der Beweger (50) ein linear bewegliches Kugelumlaufspindelelement einschließt, das eine gleiche Steigung wie jene der Schraubkappe aufweist.

13. Vorverarbeitungsvorrichtung umfassend:
die Vorrichtung (100) zum Anbringen und Abnehmen von Kappen nach einem der Ansprüche 1 bis 12, die gleichzeitig eine Vielzahl von Kappen (2) an einer Vielzahl von Behältern (1) anbringt oder davon abnimmt; und
einen Vorprozessor, der eine Vorverarbeitung bei Proben, die in der Vielzahl von Behältern (1) enthalten sind, durchführt.

## Revendications

1. Dispositif de fixation-détachement de bouchon (100) comprenant :
un dispositif d'entraînement en rotation (40) ;
une pluralité de parties de fixation-détachement (30) correspondant à une pluralité de récipients (1) ; et
un émetteur (60) qui transmet la rotation du dispositif d'entraînement en rotation (40) à la pluralité de parties de fixation-détachement (30), dans lequel
chacune de la pluralité de parties de fixation-détachement (30) comporte une partie d'actionnement (OP) qui se déplace dans une première direction ou une deuxième direction qui est opposée à la première direction en réponse à la rotation du dispositif d'entraînement en rotation (40) et fait tourner un bouchon (2) pour fixer le bouchon (2) à ou détacher le bouchon (2) d'un récipient (1) correspondant, et une partie de limitation (32) qui limite un couple à appliquer au bouchon (2) par la partie d'actionnement (OP) lorsque le bouchon (2) est fixé au récipient (1), **caractérisé en ce que** le dispositif de fixation-détachement de bouchon (100) comprend en outre :
un détecteur de rotation (80) qui détecte la rotation de la partie d'actionnement (OP) ; et
un dispositif de détermination qui détermine si le bouchon (2) est correctement fixé au récipient (1) sur la base d'un résultat de détection par le détecteur de rotation (80),
dans lequel le dispositif d'entraînement en rotation (40) comporte
un générateur d'impulsions d'entraînement (40b) qui génère une impulsion d'entraînement, et
un moteur électrique (40a) qui est mis en rotation sur la base d'une impulsion d'entraînement générée par le générateur d'impulsions d'entraînement (40b), et le dispositif de détermination détermine si le bouchon (2) est correctement fixé au récipient (1) sur la base d'un décompte d'impulsions d'entraînement générées par le générateur d'impulsions d'entraînement (40b) et d'un résultat de détection par le détecteur de rotation (80).

2. Dispositif de fixation-détachement de bouchon (100) selon la revendication 1, dans lequel
chacune de la pluralité de parties d'actionnement (OP) comporte
une partie de préhension (33) qui saisit le bouchon (2), et une partie entraînée (31) qui est tournée lorsque la partie de préhension (33) est reliée et la rotation du dispositif d'entraînement en rotation (40) est transmise par l'émetteur (60).

3. Dispositif de fixation-détachement de bouchon (100) selon la revendication 2, dans lequel
chaque partie entraînée (31) comporte
un premier élément entraîné auquel la rotation du dispositif d'entraînement en rotation (40) est transmise par l'émetteur (60), et
un deuxième élément entraîné auquel la partie de préhension (33) est reliée, dans lequel
chaque partie de limitation (32) relie le premier élément entraîné et le deuxième élément entraîné l'un à l'autre de sorte qu'un couple transmis du premier élément entraîné au deuxième élément entraîné est limité lorsque le bouchon (2) est fixé au récipient (1).

4. Dispositif de fixation-détachement de bouchon (100) selon l'une quelconque des revendications 1 à 3, dans lequel
le dispositif de détermination détermine si le bouchon (2) est correctement fixé sur la base d'un résultat de détection par le détecteur de rotation (80) lorsqu'un décompte d'impulsions d'entraînement générées par le générateur d'impulsions d'entraînement (40b) est dans une plage admissible prédéterminée dans laquelle le bouchon (2) peut être correctement fixé au récipient (1).

5. Dispositif de fixation-détachement de bouchon (100) selon la revendication 4, dans lequel
le dispositif de détermination détermine que le bouchon (2) est correctement fixé dans un cas dans lequel la rotation d'un deuxième élément entraîné est détectée par le détecteur de rotation (80) lorsqu'un décompte d'impulsions entraînées généré par le générateur d'impulsions d'entraînement (40b) n'atteint pas la plage admissible, et un arrêt du deuxième élément entraîné est détecté par le détecteur de rotation (80) lorsqu'un décompte d'impulsions se situe dans la plage admissible.

6. Dispositif de fixation-détachement de bouchon (100) selon la revendication 4 ou 5, dans lequel
le dispositif de détermination détermine que le bouchon (2) n'est pas correctement fixé dans un cas dans lequel un arrêt d'un deuxième élément entraîné est détecté par le détecteur de rotation (80) lorsqu'un décompte d'impulsions d'entraînement générées par le générateur d'impulsions d'entraînement (40b) est inférieur à une limite inférieure de la plage admissible.

7. Dispositif de fixation-détachement de bouchon (100) selon l'une quelconque des revendications 4 à 6, dans lequel
le dispositif de détermination détermine que le bouchon (2) n'est pas correctement fixé dans un cas dans lequel la rotation d'un deuxième élément entraîné est détectée par le détecteur de rotation (80) lorsqu'un décompte d'impulsions d'entraînement générées par le générateur d'impulsions d'entraînement (40b) est supérieur à une limite supérieure de la plage admissible.

8. Dispositif de fixation-détachement de bouchon (100) selon l'une quelconque des revendications 1 à 7, comprenant en outre une partie tampon (35) qui absorbe une force de pression appliquée du bouchon (2) à la partie d'actionnement (OP) lorsque le bouchon (2) est fixé au récipient (1).

9. Dispositif de fixation-détachement de bouchon (100) selon la revendication 8, dans lequel
la partie tampon (35) maintient de manière mobile la partie d'actionnement (OP) dans la deuxième direction par rapport au bouchon (2).

10. Dispositif de fixation-détachement de bouchon (100) selon l'une quelconque des revendications 1 à 9, dans lequel
la partie de limitation (32) ne limite pas un couple à appliquer au bouchon (2) par la partie d'actionnement (OP) lorsque le bouchon (2) est détaché du récipient (1).

11. Dispositif de fixation-détachement de bouchon (100) selon l'une quelconque des revendications 1 à 9, comprenant en outre :
une partie de base (10) ;
un support (20) qui maintient la pluralité de parties de fixation-détachement (30) ; et
un élément mobile (50) qui déplace le support (20) par rapport à la partie de base (10) dans la première ou la deuxième direction en réponse à la rotation du dispositif d'entraînement en rotation (40).

12. Dispositif de fixation-détachement de bouchon (100) selon la revendication 11, dans lequel
le bouchon (2) comprend un bouchon à visser, et
le dispositif de déplacement (50) comporte un élément à visser à billes à mouvement linéaire présentant un même pas que celui du bouchon à visser.

13. Dispositif de prétraitement comprenant :
le dispositif de fixation-détachement de bouchon (100) selon l'une quelconque des revendications 1 à 12 qui fixe simultanément une pluralité de bouchons (2) à ou détache la pluralité de bouchons (2) d'une pluralité de récipients (1) ; et
un préprocesseur qui effectue un prétraitement sur des échantillons contenus dans la pluralité de récipients (1).
